# EUROPÄISCHE PATENTANMELDUNG

(11) **EP 4 563 262 A1**
(43) Veröffentlichungstag der Anmeldung: **04.06.2025**
(21) Anmeldenummer: 23213364.5
(22) Anmeldetag: 30.11.2023
(51) Int. Cl.: B21K 1/46, B21K 1/56

(54) **VERFAHREN ZUR HERSTELLUNG EINER ROSTFREIEN HOCHFESTEN SELBSTBOHRSCHRAUBE**

(71) Anmelder: SFS Group International AG, 9435 Heerbrugg (CH)
(72) Erfinder: Comoth, Marc, 26290 Donzere (FR); Kuster, Hanspeter, 9436 Balgach (CH); Spirig, Sven, 9444 Diepoldsau (CH)

(57) **Zusammenfassung**

Ein Verfahren zur Herstellung einer hochfesten Selbstbohrschraube (100) vollständig aus einem Edelstahlmaterial wird beschrieben, wobei die Selbstbohrschraube (100) keinen dem Herstellprozess nachgelagerten, die Materialhärte verbessernden Wärmebehandlungsprozess durchlaufen muss. Ein schaftförmiger Rohling (110) wird als Drahtabschnitt (105) aus einem Edelstahlmaterial bereitgestellt. Ein Schraubenkopf (140) wird mittels Kaltumformung an einem ersten Längsende (120) des Rohlings (110) gebildet. Anschliessend wird der Durchmesser eines Endabschnitts des Rohlings durch Kaltumformung verringert. Sodann wird eine Bohrspitze (150) am zweiten Längsende (130) des Rohlings (110) durch eine quer zur Längsachse erfolgende Zwickbewegung hergestellt. In einem nachfolgenden Prozessschritt wird die Bohrspitze (160) fertiggestellt. Eventuell an den Schneidkanten (180) der Bohrspitze (160) verbliebene, überstehende Materialfahnen (170) werden während des nachfolgenden Gewinderollvorgangs abgeschert.

Beim Vorformen werden in dem Bereich der späteren Schneidkanten (180) sogenannte Konturkanten (190) gebildet, bei denen die verbleibende Materialstärke zwischen 0.3mm bis 1.0mm beträgt. Das Fertigformen der Bohrspitze erfolgt durch Umformen der Konturkanten (190) zu Schneidkanten (180), wobei die verbliebene Materialstärke zwischen Schneidkante (180) und Materialfahne (170) zwischen 0.05mm bis 0.2mm beträgt. Lokale Durchbrüche (Perforationen) sind dabei zulässig.

## Beschreibung

Die vorliegende Erfindung betrifft ein Verfahren zur Herstellung eines hochfesten Befestigers aus rostfreiem Stahl, insbesondere einer Selbstbohrschraube sowie eine auf diese Weise hergestellte Selbstbohrschraube.

### TECHNISCHER HINTERGRUND

Stahl wird üblicherweise als eine Eisen-Kohlenstoff-Legierung definiert mit einem Kohlenstoff-Anteil von höchstens 2%. Als Carbonstahl bzw. unlegierter Stahl werden solche Varianten bezeichnet, die nur geringe Verunreinigungen bzw. keine gezielt zugesetzten Legierungsbestandteile wie Chrom, Nickel, Kupfer, Mangan oder Silizium aufweisen. Nichtrostende Stähle, vielfach auch als Edelstähle bezeichnet, zeichnen sich durch einen Legierungsanteil von >10% Chrom und weniger als 1.2% Kohlenstoff aus.

Wegen der Einlagerung von Kohlenstoff in die Matrix des Stahl-Gitters lässt sich Carbonstahl grundsätzlich besser härten als nichtrostende Stähle. Diese Härtung wird üblicherweise durch Härteverfahren (Wärmebehandlung, Einsatzhärten wie Carbonitrieren) oder Kaltumformungsprozesse erzielt. Diese - in der Regel erwünschte - Härte des Stahls wird aber mit dem grundsätzlichen Nachteil der Korrosionsanfälligkeit erkauft. Daher sind bei bestimmten Endprodukten eine Nachbehandlung (Beschichtung, Passivierung) erforderlich, um sie in gewissen Grenzen resistent gegen Umwelteinflüsse zu machen.

Unter den nichtrostenden Stählen sind die gebräuchlichsten jene mit den Legierungsbestandteilen Chrom und Nickel wie die Stahlsorten 1.4301 (V2A oder A2) bzw. 1.4401 (V4A oder A4). Für diese Stähle mit spezifizierter Zusammensetzung existieren Normen, so dass diese Sorten mit vergleichbaren Eigenschaften aus verschiedenen Quellen bezogen werden können. Diese Stähle werden auch als austenitisch bezeichnet, weil die Legierungsbestandteile Ni, C, Mn und N bei der Herstellung die Austenitphase im Stahl stabilisieren.

Duplexstahl ist ein Stahl mit zweiphasigem Gefüge, das aus einer Ferrit-Matrix mit Inseln aus Austenit besteht. Duplexstahl weist, im Vergleich zu rein austenitischen Stählen einen geringeren Nickel Gehalt auf, was dazu führt, dass bei Raumtemperatur nicht das gesamte Gefüge austentitisch wird. Beispiele hierfür sind die Sorten 1.4462 bzw. 1.4362 Viele Produkte des täglichen Bedarfs wie auch der Bauindustrie werden aus Stahl hergestellt; unter anderem Befestiger wie Schrauben in allen denkbaren Grössen für viele Anwendungsbereiche. Dabei wäre es oft wünschenswert, die Härte von Kohlenstoffstahl mit der Korrosionsresistenz von Edelstahl zu kombinieren. Dies wird insbesondere bei Bohrschrauben üblicherweise dadurch erreicht, dass man einen Kohlenstoffstahl-Drahtabschnitt an einen Edelstahldraht gleichen Durchmessers anschweisst und einen solchen Rohling in bekannter Weise zu einem Befestiger verarbeitet. Dabei kann die gerollte bzw. umgeformte Spitze aus Kohlenstoffstahl durch Wärmebehandlung gehärtet werden, während der Schaft aus Edelstahl in der Regel unbehandelt bleiben kann, was auch die korrosionshemmenden Eigenschaften des Stahls bewahrt.

Als Befestiger wird in dieser Schrift eine mechanische Komponente bezeichnet, mit deren Hilfe zwei Bauteile miteinander dauerhaft verbunden werden können (lösbar wie auch unlösbar). Als Schraube wird spezifisch ein Befestiger bezeichnet, der einen im Wesentlichen längsausgedehnten Schaft aufweist mit zylindrischem oder zylinderähnlichem Querschnitt. An einem Längsende des Schaftes befindet sich ein Kraftangriff, der als Kopf mit Kraftangriffsflächen gestaltet sein kann. Am entgegengesetzten Schaftende befindet sich die Spitze der Schraube. Der Schaft ist zumindest in einem Teilabschnitt mit einem Gewinde versehen, es kann ein- oder mehrgängig sein mit konstanter oder veränderlicher Steigung. Die Spitze kann als Bohrspitze mit Schneidkanten, als stumpfkonische, gewindelose Verdrängerspitze oder als spitzkonische, selbst loch- und gewindeformende Spitze ausgebildet sein. Je nach Anwendungszweck kann das Gewinde vom Schaft bis auf den Konus bzw. an die Schraubenspitze reichen.

Als Bohrschraube wird eine Schraube mit einer Bohrspitze mit Schneidkanten bezeichnet, bei der das (Schaft-) Gewinde gerollt und die Bohrspitze gezwickt wird. Zwicken bezeichnet dabei eine spezielle Art der Kaltumformung, bei der ein Schaftende des Rohlings durch zwei zulaufende Zwickbacken in die gewünschte Form einer Bohrspitze gepresst wird. Andere Verfahren der Kaltumformung sind das Rollen, das Stauchen, Ziehen und Fliesspressen. Grundsätzlich versteht der Fachmann unter Kaltumformung ein plastisches Umformen von Metallen unterhalb der Rekristallisationstemperatur, was bekanntermassen zu einer Kaltverfestigung des umgeformten Materials führt.

Die Herstellung von Befestigern bzw. Schrauben rein aus Edelstählen ist bekannt; die Durchdringungsfähigkeit von Stahl mit entsprechenden (Selbst-)Bohrschrauben bzw. loch- und gewindeformenden Schrauben ist jedoch begrenzt. Bimetallschrauben sind herstelltechnisch komplex und teuer zu realisieren. Es besteht daher ein Bedarf an Befestigern, insbesondere Schrauben bzw. Selbstbohrschrauben, welche vollständig aus einer korrosionsfesten Stahlsorte herstellbar sind und dennoch Stahlbleche mit >1.5mm Stärke ohne Vorbohren durchdringen können.

### STAND DER TECHNIK

Die Offenlegungsschrift DE 29 29 179 beschreibt eine korrosionsbeständige, selbstbohrende und gewindeformende Schraube aus einem rostfreien austenitischen Stahlmaterial (nach US Norm Serie 300). Die Verfahrensschritte bei der Herstellung umfassen das Aufstauchen eines Kopfes am Ende eines Drahtabschnitt des genannten Materials und nachfolgend, am entgegengesetzten Ende, die Ausbildung einer Bohrspitze durch einen Zwickvorgang mit definierter maximaler Schliessgeschwindigkeit der Zwickbacken. Dadurch wird die austenitische Struktur der Bohrspitze in eine martensitische überführt. Die Schrift empfiehlt zusätzlich, den Pressrohling auf Temperaturen unter 0°C zu kühlen, z.B. durch Trockeneis.

Die Schrift EP 2 080 572 beschreibt die Herstellung eines hochfesten Befestigers aus austenitischem Stahl der 300er Serie (gemäss US-Norm), indem in einem ersten Arbeitsschritt ein Schaftrohling um 15% im Durchmesser durch Kaltumformung verkleinert wird. Danach werden Kopf und Spitze ebenfalls durch Kaltumformung hergestellt. Das Gewinde wird durch ein Rollverfahren auf dem Schaft erzeugt. Weiter wird vorgeschlagen, bei dem kaltumgeformten Befestiger durch Nachbehandlung bzw. Beschichtung die Rostbeständigkeit zu verbessern.

In der Schrift DE 2 103 053 bzw. US 3,683,436 wird die Herstellung einer Bohrschraube mit gezwickter Bohrspitze beschrieben. Der Drahtrohling wird hierbei an einem Ende durch Fliesspressen in seinem Durchmesser verringert und anschliessend durch Zwicken in seine Endform gebracht.

Die Schrift EP 2 617 500 A1 beschreibt die Herstellung einer einteiligen Edelstahl-Bohrschraube, bei dem die Bohrspitze in zwei Umformschritten hergestellt wird. In einem ersten Schritt wird ein Endabschnitt eines Rohlings abgeplattet und danach der abgeplattete Endabschnitt zur endgültigen Bohrspitze umgeformt.

Es ist Aufgabe der vorliegenden Erfindung, die beschriebenen Verfahren zu verbessern, insbesondere Verfahrensschritte zur Herstellung einer korrosionsbeständigen, lochformenden und gewindeformenden Schraube mit einer Bohrspitze vorzuschlagen, die die Verwendung von Bimetallschrauben weitgehend überflüssig macht.

Diese Aufgabe wird mit den Merkmalen des unabhängigen Anspruches gelöst. Vorteilhafte Ausführungsformen der Erfindung sind in den abhängigen Ansprüchen angegeben.

### DARSTELLUNG DER ERFINDUNG

Im Folgenden wird der Herstellprozess einer Selbstbohrschraube gemäss vorliegender Erfindung als eine Abfolge von Prozessschritten beschrieben. Diese stellen eine fertigungstechnisch aufeinander folgende Reihe von Arbeitsschritten dar, die üblicherweise zeitnah nacheinander ausgeführt werden. Zur Herstellung finden in der Regel mehrstufige Kaltumform-Maschinen Verwendung, die getaktet und mit definierten Umformraten ein Werkstück mit Hilfe verschiedener Werkzeuge in die gewünschte Form bringen. Zwischenschritte in der Prozesskette wie Qualitätskontrollen, Transport, Reinigung, Sortierung und Konfektionierung sind nicht erwähnt und haben keinen Einfluss auf die Durchführbarkeit der Erfindung.

Die Selbstbohrschraube gemäss vorliegender Erfindung wird vollständig aus einem Edelstahlmaterial gefertigt und erreicht ihre hohe Festigkeit auch ohne einen den Fertigungsschritten A-F nachfolgenden, die Materialhärte gezielt verbessernden Wärmebehandlungsprozess. Ein solcher ist daher ausdrücklich ausgeschlossen. Der Vorteil liegt in einer Zeit- und Energieersparnis.

### Schritt A:

Dieser Prozessschritt beinhaltet die Bereitstellung eines Drahtabschnitts, der, wie im Stand der Technik bekannt, als Stück von einem Drahtcoil oder als Abschnitt von entsprechender Stangenware eines Edelstahlmaterials herstellbar ist. Im Folgenden wird dieser auch als Rohling bezeichnet. Der Abschnitt kann nach bekannter Art durch Abscheren, Absägen oder auf andere Weise aus dem Vormaterial gewonnen werden. Länge und Durchmesser des Rohlings hängen von den geplanten Dimensionen der herzustellenden Selbstbohrschraube ab, die Auslegung erfolgt nach den bekannten Regeln im Stand der Technik.

### Schritt B:

Aufstauchen eines Schraubenkopfs mittels Kaltumformung an einem ersten Längsende des Rohlings. Das Aufstauchen des Schraubenkopfs kann auch in einem oder mehreren Zwischenschritten erfolgen, um den Umformgrad pro Stauchvorgang zu kontrollieren. Die Herstellung eines Kraftangriffs (Aussensechskant, Innnensechsrund, Inbus, ...) am oder im Schraubenkopf sei im Schritt B mitumfasst.

### Schritt C:

Verringern des Durchmessers eines (Längs-)Abschnitts bzw. Schaftabschnitts am zweiten Längsende des Rohlings durch Kaltumformung. An dem, dem Schraubenkopf gegenüberliegenden, zweiten Längsende wird eine Durchmesserreduzierung vorgenommen. Dadurch wird eine Erhöhung der Oberflächenhärte bewirkt wie auch eine Verlängerung des betreffenden Abschnitts. Diese Durchmesserverringerung kann auch in mehreren Teilschritten vorgenommen werden; diese Variante sei in Schritt C äquivalent mitumfasst.

Die Länge des Schaftabschnitts wird mindestens den (Längs-)Abschnitt umfassen, der in den nachfolgenden Schritten D und E für die Herstellung der Bohrspitze vorgesehen ist. Er kann aber bedarfsweise auch zusätzlich den Schaftabschnitt einschliessen, der für das Gewinde auf dem Schaft vorgesehen ist. Die Durchmesserverringerung kann auch, wenn dies fertigungstechnisch sinnvoll oder nützlich ist, die ganze Schaftlänge bis unter den Kopf umfassen.

### Schritt D:

Vorformen einer Bohrspitze am zweiten Längsende des Rohlings durch eine quer zur Längsachse erfolgende Zwickbewegung zwischen zwei gegenüberliegenden Werkzeugbacken. Das in Schritt C im Durchmesser verjüngte zweite Längsende des Rohlings wird vorgeformt. Vorformen bedeutet in diesem Zusammenhang, dass zwei sogenannte Zwickbacken, also Werkzeughälften einer Zwickvorrichtung, das Längsende des Rohlings in eine als Bohrspitze erkennbare, aber nicht den Endmassen entsprechende Vorform bringen.

Die entstehende Vorform schliesst bei diesem Pressvorgang entstehende Materialfahnen ein, welche aus nach aussen verdrängtem Überschussmaterial gebildet werden. Die vorgeformte Bohrspitze ist somit von einer flachen, dünnen, unregelmässig geformten Materialscheibe umgeben. Die Ebene der Materialscheibe entspricht der durch die zwei zulaufenden Werkzeugbacken definierten Schliessebene bzw. Schliessfläche.

Mit Vorformen der Bohrspitze ist weiterhin gemeint, dass die je nach gewählter Bohrspitzen-Layout vorgesehenen Hauptschneiden, Querschneiden, Spannuten, Freiflächen der zukünftigen Bohrspitze in ihrer Form und Lage identifizierbar sind, masslich aber noch nicht den Endmassen entsprechen. Üblicherweise werden die Werkzeugbacken so ausgelegt, dass die zukünftigen Schneidkanten wenigstens teilweise in der Materialscheibe liegen und beim Vorformen bereits durch eingeprägte Konturkanten vorgezeichnet sind.

### Schritt E:

Fertigformen der Bohrspitze. Durch einen weiteren Kaltumformschritt werden die gemäss spezifischen Designs vorgesehenen Hauptschneiden, Querschneiden, Spannuten und Freiflächen der Bohrspitze in Bezug auf Form und Lage fertig geformt und so die vorgesehenen Endmasse erreicht. Die Konturkanten werden dabei weiter ausgeformt und - je nach Anforderung - zu Schneidkanten. Bei diesem Schritt wird die erwähnte Materialscheibe weiter ausgedünnt und kann teilweise entlang der Konturkanten bzw. endgeformten Schneidkanten perforiert werden oder vorliegen.

### Schritt F:

Die an den Schneidkanten bzw. Konturkanten der Bohrspitzen verbliebenen, überstehenden Materialfahnen werden während eines nachfolgenden Gewinderollvorgangs abgeschert. Das Gewinde auf dem Schaft kann in voller Länge zwischen Schraubenkopf und Bohrspitze aufgebracht werden oder auch auf Teilbereichen, je nach Auslegung.

Die Erfindung zeichnet sich hierbei in den Schritten D und E dadurch aus, dass
- beim Vorformen in Schritt D im Bereich der späteren Schneidkanten Konturkanten gebildet werden, wobei die verbleibende Materialstärke zwischen Konturkante und Materialfahne zwischen 0.3mm (incl.) bis 1.0mm (excl.) beträgt. Diese Konturkanten sind als Kerben im Rohling zwischen der vorgesehenen Bohrspitze und den Materialfahnen erkennbar.
- nach dem Fertigformen in Schritt E die Konturkanten zu Schneidkanten umgeformt sind und die verbliebene Materialstärke zwischen Schneidkante und Materialfahne zwischen 0.05mm (incl.) bis 0.3mm (incl.) beträgt, wobei auch lokale Durchbrüche möglich sind (Perforation). Da bedeutet, dass in einzelnen Bereichen die Schneidkanten von den Materialfahnen bereits getrennt vorliegen.

Bevorzugt erfolgt das Fertigformen der Bohrspitze in Schritt E analog Schritt D durch eine quer zur Längsachse des Rohlings erfolgende Zwickbewegung von zwei gegenüberliegenden Werkzeugbacken. Um den beschriebenen Effekt gemäss Schritt D und E zu erreichen und die Werkzeugherstellung zu vereinfachen, die in Schritt D und E eingesetzten Werkzeugbacken formähnlich, aber nicht gleich gestaltet. Formähnlich ist damit im Gegensatz zu den im Stand der Technik bekannten Vorformungen zu sehen, die lediglich ein Abflachen, Abplatten oder eine rein zylindrische Rohform vorsehen. Die in Schritt D eingesetzten Werkzeuge erzielen dagegen ein Resultat, welches bereits einer Bohrspitze gleicht, aber als solches noch nicht brauchbar wäre.

Durch diese Auslegung wird erreicht, dass der finale, der Bohrspitze ihre Endform gebende Schritt eine Umformung mit geringerem Umformgrad bleibt und dadurch geringere Umformwärme entsteht. Die erzielte Kaltverfestigung bleibt in den Schneiden erhalten.

Die beim Vorformen entstehende Umformwärme kann durch die nur vorgeprägten Konturkanten besser in die umgebende Materialscheibe bzw. Materialfahnen abfliessen und verringert die Neigung zur Rekristallisation des Stahlgefüges.

Wie anfangs erwähnt erlaubt das vorgestellte Verfahren die vorteilhafte Anwendung mit vielen Edelstahlmaterialien. Darunter zählen Edelstähle der Normen 1.4301, 1.4551 oder 1.4307 (V2A), bzw. 1.4401, 1.4571 oder 1.4404 (V4A) oder 1.4462, 1.4410 oder 1.4501 (Duplex). Ähnliche Stahlsorten anderer Normenwerke seien äquivalent mitumfasst.

Besonders vorteilhaft lässt sich Edelstahlmaterial als Ausgangsmaterial verwenden, das vor der Bearbeitung gemäss Schritt A bereits eine Oberflächenfestigkeit zwischen 200 bis 350 Hv aufweist.

Die in Schritt C erläuterte Durchmesserverringerung beträgt vorteilhaft mindestens 20% und höchstens 40%. Im Rahmen der Erfindung sei auch eine Umformung in mehreren Teilschritten mitumfasst.

Nach den oben beschriebenen Kaltumformschritten A bis F folgt vorteilhaft eine Beschichtung, um die Verwendbarkeit der Schraube weiter zu verbessern. Bewährt hat sich insbesondere eine galvanische Zn-Ni Beschichtung. Dieser Prozessschritt sei unter Schritt G zusammengefasst. Bevorzugt wird die Zn-Ni Beschichtung aus Schritt G 12-15% Nickel aufweisen.

In einem weiteren Prozessschritt H kann auf der Zn-Ni Beschichtung gemäss Schritt G eine ein- oder mehrlagige Gleitbeschichtung aus Wachs, Kunststoffen oder Mischungen daraus aufgebracht werden. Solche Schichten wirken reibungsmindernd insbesondere auf der Bohrspitze und ihren Schneidkanten.

Ein besonders effizienter Zusatzschritt, um die hohe Festigkeit der hier beschriebenen Selbstbohrschraube zu gewährleisten, besteht darin, zwischen Vorformen (Schritt D) und Fertigformen (Schritt E) der Bohrspitze einen Abkühlvorgang des Rohlings durchzuführen. Es hat sich gezeigt, dass sowohl ein aktives Kühlen des Rohlings mittels eines Kühlfluids wirksam ist wie auch ein passives Abkühlenlassen des Rohlings in einer temperaturkontrollierten Umgebung. Das Kühlfluid kann dabei ein flüssiges Medium sein, das auf den Rohling aufgesprüht, gespritzt oder über ihn gepumpt wird. Es kann sich auch um einen Tauchvorgang handeln, ein Bad oder eine äquivalente Kühlmethode. Auch gasförmige Medien, Kühlluft, durch Trockeneis gekühlte Umgebungsluft sind wirksam.

Passives Abkühlenlassen wird verstanden als die Abgabe der Wärme des Rohlings an die Umgebung ohne gezielte Kühlungsmassnahmen, bis die gewünschte Endtemperatur erreicht ist. Es hat sich gezeigt, dass ein Abkühlenlassen auf übliche Umgebungstemperaturen mit dem geringsten Aufwand verbunden ist. Auf jeden Fall sollte die Abkühlung auf Temperaturen unter 100° C, bevorzugt unter 50° C erfolgen.

Es hat sich gezeigt, dass durch das erfinderische Verfahren die Oberflächenhärte des Rohlings nach Schritt C im dadurch umgeformten Bereich im Wesentlichen 300 - 380 Hv beträgt. Wird ein Kühlvorgang wie oben beschrieben zwischen Schritt D und E durchgeführt, lässt sich die Oberflächenhärte des Rohlings nach dem Abkühlvorgang (gemessen nach Schritt E im dadurch umgeformten Bereich im Wesentlichen auf 450 - 550 Hv) steigern.

Eine hochfeste Selbstbohrschraube lässt sich somit einstückig aus rostfreiem Edelstahl herstellen durch ein Verfahren wie vorgängig beschrieben.

### KURZBEZEICHNUNG DER FIGUR

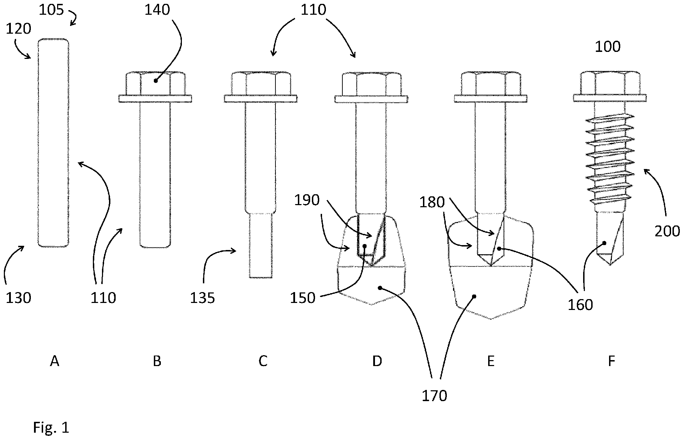

Figur 1 zeigt eine Abfolge von Fertigungsstadien A bis F analog den beschriebenen Prozessschritten.

### BESCHREIBUNG DER FIGUR

Figur 1 zeigt die Abfolge der in der Erfindung beschriebenen Kern-Verfahrensschritte A-F.

A zeigt einen Drahtabschnitt 105 mit erstem Längsende 120 und zweitem Längsende 130. Dieser Rohling 110 erhält in Schritt B einen Schraubenkopf 140 durch Kaltumformung. Der gezeigte Typ von Schraubenkopf 140 stellt stellvertretend für alle Arten von technisch sinnvollen Schraubenköpfen. C zeigt einen durch Kaltumformung verjüngten (End)abschnitt 135 von Rohling 110.

D zeigt den Zustand des Rohlings 110 nach dem Vorformen der Bohrspitze 150. Die Konturkanten 190 sind als breite Linien dargestellt. Diese gezeigten Konturkanten entsprechen einer Möglichkeit, eine Bohrspitze auszubilden, im Stand der Technik ist eine Vielzahl davon bekannt. Dort, wo die Konturkante 190 und die Materialfahne 170 aufeinandertreffen, ist das Anspruchskriterium "verbleibende Materialstärke" anwendbar. Als Konturkante gilt darüber hinaus auch jede Kante des Bohrspitzendesigns, die geformt wird, auch wenn es nicht in der Materialscheibe bzw. Ebene der Materialfahne liegt. Für diese Konturkanten ist das Anspruchskriterium "verbleibende Materialstärke" logischerweise nicht anwendbar.

Im Bereich E der Figur 1 ist der Zustand nach dem Fertigformen dargestellt mit dünnen Linien für die Schneidkanten 180, die aus den Konturkanten 190 hervorgegangen sind. Das genannte Anspruchskriterium "verbliebene Materialstärke" ist für die die Schneidkanten 180 anwendbar, die an die Materialfahne 170 grenzen. Wie ersichtlich ist die Materialfahne 170 durch die zweite Umformung vergrössert worden. Die zulässige Perforation ist hier nicht dargestellt.

Bereich F von Figur 1 zeigt die fertig kaltumgeformte Selbstbohrschraube 100 mit Gewinde 200 und von der Materialfahne 170 befreiten Bohrspitze 160.

Der Begriff Rohling wird in diesem Abschnitt als Sammelbegriff für alle Erscheinungsformen der Selbstbohrschraube der Schritte A bis (und mit) E bezeichnet, auch wenn die äussere Erscheinung der Schraube sich von Schritt zu Schritt ändert.

## Patentansprüche

1. Verfahren zur Herstellung einer hochfesten Selbstbohrschraube (100), vollständig aus einem Edelstahlmaterial, wobei die Selbstbohrschraube (100) keinen dem Herstellprozess nachgelagerten, die Materialhärte verbessernden Wärmebehandlungsprozess durchläuft,
**mit folgenden Schritten**
A. Bereitstellen eines schaftförmigen Rohlings (110) als Drahtabschnitt (105) aus einem Edelstahlmaterial;
B. Aufstauchen eines Schraubenkopfs (140) mittels Kaltumformung an einem ersten Längsende (120) des Rohlings (110);
C. Verringern des Durchmessers eines Abschnitts (135) am zweiten Längsende (130) des Rohlings (110) durch Kaltumformung;
D. Vorformen einer Bohrspitze (150) am zweiten Längsende (130) des Rohlings (110) durch eine quer zur Längsachse erfolgende Zwickbewegung zwischen zwei gegenüberliegenden Werkzeugbacken;
E. Fertigformen der Bohrspitze (160);
F. Abscheren von an den Schneidkanten (180) der Bohrspitze (160) verbliebenen, überstehenden Materialfahnen (170) während eines nachfolgenden Gewinderollvorgangs
**dadurch gekennzeichnet, dass**
- beim Vorformen in Schritt D der Bereich der späteren Schneidkanten (180) Konturkanten (190) gebildet werden, wobei die verbleibende Materialstärke zwischen Konturkante (190) und Materialfahne (170) zwischen 0.3mm bis 1.0mm beträgt; und
- nach dem Fertigformen in Schritt E die Konturkanten (190) zu Schneidkanten (180) umgeformt sind und die verbliebene Materialstärke zwischen Schneidkante (180) und Materialfahne (170) zwischen 0.05mm bis 0.3mm beträgt, wobei auch lokale Durchbrüche möglich sind.

2. Verfahren nach Anspruch 1, **dadurch gekennzeichnet, dass** das Edelstahlmaterial ein Edelstahl ausgewählt aus den Normen 1.4301, 1.4551 oder 1.4307 (V2A), bzw. 1.4401, 1.4571 oder 1.4404 (V4A) oder 1.4462, 1.4362, 1.4410 oder 1.4501 (Duplex) ist.

3. Verfahren nach Anspruch 1-2, **dadurch gekennzeichnet, dass** das Ausgangs-Edelstahlmaterial vor der Bearbeitung gemäss Schritt A eine Oberflächenfestigkeit zwischen 200 bis 350 Hv aufweist.

4. Verfahren nach Anspruch 1-3, **dadurch gekennzeichnet, dass** die Durchmesserverringerung in Schritt C mindestens 20% und höchstens 40% beträgt.

5. Verfahren nach Anspruch 1-4, **dadurch gekennzeichnet, dass** das Fertigformen der Bohrspitze in Schritt E durch eine quer zur Längsachse des Rohlings erfolgende Zwickbewegung von zwei gegenüberliegenden Werkzeugbacken bewirkt wird.

6. Verfahren nach Anspruch 1-5, **dadurch gekennzeichnet, dass** die in Schritt D und E eingesetzten Werkzeugbacken formähnlich, aber nicht gleich sind.

7. Verfahren nach Anspruch 1-6, **dadurch gekennzeichnet, dass** nach den Kaltumformschritten A bis F ein Beschichtungsschritt G erfolgt, wobei die Beschichtung eine galvanische Zn-Ni Beschichtung ist.

8. Verfahren nach Anspruch 7, **dadurch gekennzeichnet, dass** die die Zn-Ni Beschichtung aus Schritt G 12-15% Nickel aufweist.

9. Verfahren nach Anspruch 7-8, **dadurch gekennzeichnet, dass** auf die Zn-Ni Beschichtung gemäss Schritt G in einem Schritt H eine ein- oder mehrlagige Gleitbeschichtung aus Wachs, Kunststoffen oder Mischungen daraus aufgebracht wird.

10. Verfahren nach Anspruch 1-9, **dadurch gekennzeichnet, dass** zwischen Vorformen (Schritt D) und Fertigformen (Schritt E) der Bohrspitze ein Abkühlvorgang des Rohlings durchgeführt wird.

11. Verfahren nach Anspruch 10, **dadurch gekennzeichnet, dass** der Abkühlvorgang durch aktives Kühlen des Rohlings mittels eines Kühlfluids bewirkt wird.

12. Verfahren nach Anspruch 10-11, **dadurch gekennzeichnet, dass** der Abkühlvorgang durch passives Abkühlenlassen des Rohlings in einer temperaturkontrollierten Umgebung erfolgt.

13. Verfahren nach Anspruch 1-12, **dadurch gekennzeichnet, dass** die Oberflächenhärte des Rohlings nach Schritt C im dadurch umgeformten Bereich im Wesentlichen 300-380 Hv beträgt.

14. Verfahren nach Anspruch 10-13, **dadurch gekennzeichnet, dass** die Oberflächenhärte des Rohlings nach Abkühlvorgang und nach Schritt E im dadurch umgeformten Bereich im Wesentlichen 450-500 Hv beträgt.

15. Hochfeste Selbstbohrschraube, einstückig hergestellt aus rostfreiem Edelstahl, nach einem Verfahren gemäss den Ansprüchen 1 bis 14.
